# EUROPÄISCHE PATENTSCHRIFT

(11) **EP 1 397 311 B1**
(45) Veröffentlichungstag und Bekanntmachung des Hinweises auf die Patenterteilung: **16.02.2011**
(21) Anmeldenummer: 02747399.0
(22) Anmeldetag: 17.06.2002
(51) Int. Cl.: C02F 11/12

(54) **VORRICHTUNG ZUM EINDICKEN ODER ENTWÄSSERN VON SCHLÄMMEN, SEDIMENTEN AUS GEWÄSSERN ODER DERGLEICHEN, INSBESONDERE VON ÜBERSCHUSSCHLÄMMEN IN KLÄRANLAGEN**
DEVICE FOR THICKENING OR DEWATERING SLUDGE, WATERY SEDIMENTS OR THE LIKE, ESPECIALLY SURPLUS SLUDGE IN SEWAGE TREATMENT PLANTS
DISPOSITIF D'EPAISSEMENT OU DE DESHYDRATATION DE BOUES, DE SEDIMENTS CONSTITUES D'EAUX OU EQUIVALENT, NOTAMMENT D'EXCES DE BOUES DE STATIONS D'EPURATION DES EAUX USEES

(30) Priorität: 21.06.2001 DE 20110292 U
(43) Veröffentlichungstag der Anmeldung: 17.03.2004
(73) Patentinhaber: Kühn, Horst, 29683 Bad Fallingbostel (DE)
(72) Erfinder: KÜHN, Horst, 29683 Fallingbostel (DE); STEFFEN, Claudia, 81479 München (DE)
(74) Vertreter: Hauck Patent- und Rechtsanwälte
(86) Internationale Anmeldenummer: PCT/EP2002/006649
(87) Internationale Veröffentlichungsnummer: WO 2003/000603

(56) Entgegenhaltungen:
- EP-A- 1 078 888
- DE-A- 2 155 792
- GB-A- 1 063 975
- PATENT ABSTRACTS OF JAPAN vol. 009, no. 180 (C-293), 25. Juli 1985 (1985-07-25) & JP 60 048199 A (KURITA KOGYO KK), 15. März 1985 (1985-03-15)

## Beschreibung

Die Erfindung bezieht sich auf eine Vorrichtung zum Eindicken oder Entwässern von Schlämmen, Sedimenten aus Gewässern oder dergleichen, insbesondere von Überschußschlämmen in Kläranlagen nach dem Anspruch 1 oder 2.

Es ist bekannt, bei der Klärschlammbehandlung eine Eindickung vorzunehmen. Sie stellt die einfachste und kostengünstigste Art der Aufkonzentration von Feststoffen dar und kann sowohl statisch als auch maschinell erfolgen. Bei der statischen Eindickung wird die Schwerkraft ausgenutzt, damit sich Feststoffteilchen mit einer im Vergleich zum Wasser höheren Dichte am Boden eines Absetzbeckens absetzen. Die statische Eindickung kann durch den Zusatz von Flockungshilfsmitteln unterstützt werden, die die Wasserbindungskräfte reduzieren oder aufheben.

Bei der maschinellen Eindickung wird unterschieden zwischen Maschinen, die unter Ausnutzung des natürlichen Schwerefeldes arbeiten, wie Siebreaktoren, Schneckenpressen und Bandeindickem, und Zentrifugen, die zur Fest-/Flüssig-Trennung ein künstliches Schwerefeld erzeugen. Durch eine Eindickung können Suspensionen bis ca. 90 - 95 % des Wassers entzogen werden. Bei noch weitergehendem Wasserentzug spricht man von Entwässerung. Der Übergang zwischen beiden Prozessen ist fließend. Mit zunehmendem Trockengrad steigt der Aufwand für den Entzug des verbliebenen Wassers überproportional an. Entsprechend sind die nach dem Stand der Technik verwendeten Entwässerungsaggregate auf die Verwendung von hohen Drücken oder starken Zentrifugalkräften ausgelegt.

Bei Eindickungs- oder Entwässerungsaggregaten werden generell Flockungshilfsmittel zugesetzt, wobei es bekannt ist, daß die Trennung verbessert wird, wenn eine auf die Schlammeigenschaften angepaßte Einmischstrecke oder ein Flockungsreaktor der eigentlichen Eindickung vorgeschaltet wird.

In dem Reaktor wird die Verweilzeit so eingestellt, daß eine für den nachgeschalteten Eindickungsprozeß günstigste Flockengröße und mechanische Beanspruchbarkeit der Flocken erreicht wird.

Die bekannten maschinellen Vorrichtungen zur Schlammkonzentration erfordern einen nicht unerheblichen Aufwand an Platz, Technik und Kosten, der oft für kleinere Betriebe oder kleine und mittlere Kläranlagen nicht betrieben werden kann. Hierzu gehört auch der Energieaufwand für deren Betrieb.

Aus EP 1 078 888 A2 ist eine Vorrichtung zum Eindicken oder Entwässern von Schlämmen, insbesondere von Überschußschlämmen in Kläranlagen bekannt. Die Vorrichtung zum Eindicken besteht aus einer zwei- oder mehrgängigen Exzenterschneckenpumpe und einer seriell hierzu angeordneten Förderschnecke. Ein Merkmal der bekannten Vorrichtung ist, daß die Anlage mit zwei Förderrichtungen betrieben werden kann. Bei einer ersten Förderrichtung wird der Exzenterschneckenpumpe Dünnschlamm zugeführt. Bei der zweiten Förderrichtung wird der Förderschnecke Dünnschlamm zugeführt. Unabhängig von der Förderrichtung besitzt die Anlage im Bereich der Förderschnecke ein Sieb, das als Trennvorrichtung für die Trennung von Schlamm und Flüssigkeit fungiert. Für das Sieb ist bereits bekannt, ein kreisrundes Sieb um die Förderschnecke anzuordnen, das in beiden Richtungen drehbar ist und über eine Spülleiste gespült werden kann.

Der Erfindung liegt die Aufgabe zugrunde, eine maschinelle Vorrichtung zum Eindicken oder Entwässern von Schlämmen, Sedimenten aus Gewässern oder dergleichen, insbesondere für Überschußschlamm in Kläranlagen zu schaffen, in der eine Förderung des Schlamms mit einer Eindickung oder Entwässerung gekoppelt ist, wobei die Vorrichtung mit einfachen Mitteln an unterschiedliche Förderleistungen und Ausgangsmaterialien angepaßt werden kann.

Diese Aufgabe wird durch die Merkmale des Anspruchs 1 oder 2 gelöst.

Bei der erfindungsgemäßen Vorrichtung sind eine Exzenterschneckenpumpe und ein Fördermittel in Reihe angeordnet. Dem Gehäuse für das Fördermittel ist eine Trennvorrichtung in Form eines Siebzylinders zugeordnet, welche Flüssigkeit vom Schlamm trennt, wobei das Gehäuse einen Filtratablauf und einen Ablauf für den konzentrierten Schlamm aufweist. Darüber hinaus ist eine Zuführvorrichtung für Flockungsmittel vorgesehen, die Flockungsmittel dem Ansaugbereich der Exzenterschneckenstabile Förderleistung zu erzielen. Um einen stabilen Betrieb zu gewährleisten, ist es wichtig, daß das Sieb sich einerseits nicht zusetzt und andererseits der richtige Volumenstrom an Schlamm entweder dem Dickschlammabbau oder dem Einlauf der Exzenterschneckenpumpe zugeführt wird.

Nachteilig an der bekannten Lösung war, daß mitunter ein erheblicher Aufwand notwendig war, um die Anlage und deren Förderleistung auf einen gleichmäßigen Durchfluß einzustellen. Insbesondere mußte die Einstellung so erfolgen, daß kein Abriß bei der Förderung des Schlamms auftritt.

Erfindungsgemäß wird die Aufgabe durch einen Siebzylinder mit Fördereigenschaften gelöst, die durch Förderelemente auf der Innenseite des Siebzylinders erzielt werden. Der besondere Vorteil der Förderelemente an dem Siebzylinder ist, daß die Fördergeschwindigkeit in dem Siebzylinder für den Schlamm separat eingestellt werden kann. Ein solcher konstruktiver Aufbau ist durch den Stand der Technik nicht nahegelegt.

Auch die im Stand der Technik bereits verwendeten Pumpenwellenförderelemente vermögen hier keine Anregung zu liefern, denn diese fördern stets mit einer Geschwindigkeit, die durch die Pumpenwelle vorgegeben ist. Bessere Einstellung und Anpaßmöglichkeiten entstehen durch die Pumpenwellenförderelemente nicht. Von daher geben auch diese keine Anregung dazu, Förderelemente auf der Innenseite des Siebzylinders vorzusehen. Darüber hinaus wäre der Durchmesser einer als Förderschnecke ausgebildeten Pumpenwelle begrenzt durch die Pendelbewegung der Kuppelstange (Verlängerung der Pumpenwelle zur Exzenterschneckenpumpe). Das bedeutet in der Praxis, daß ein nicht geförderter Dickschlammbelag das Sieb verstopft, wodurch die Wirkung des Spülvorgangs beeinträchtigt wird, was innerhalb kürzester Zeit zu einem Maschinenschaden wie beispielsweise Siebplatzen führt. Erst der erfindungsgemäß ausgestaltete Siebzylinder stellt einen kontinuierlichen Schlammfluß sicher und gewährleistet eine ausreichende Spülung.

Durch die Zusammenfassung dieser beiden Prozesse Förderung und Eindickung bzw. Entwässerung in einem Arbeitsschritt wird der Aufwand an Platz, Technik und Kosten reduziert.

Exzenterschneckenpumpen, insbesondere auch zur Förderung von Feststoff enthaltenden fließfähigen Medien sind an sich bekannt. Es ist ferner bekannt, eine Förderschnecke einer Exzenterschneckenpumpe vorzuschalten, um der Exzenterschneckenpumpe Schlamm zuzuführen, jedoch gestatten die bekannten Ausführungen keinen generellen oder zusätzlichen Wasserentzug. Bei der Erfindung ist jedoch bei der Ausführungsform, die im folgenden zuerst beschrieben wird, die Reihenfolge beider Fördervorrichtungen umgekehrt. Die Exzenterschneckenpumpe dient zum einen dem Fördern des Dünnschlamms und zum anderen der Durchmischung von Dünnschlamm und Flockungsmittel. Allerdings kann diese Durchmischung auch im Anfangsbereich der Fördermittel erfolgen. Es ist jedoch auch vorteilhaft, in den Verbindungsbereich zwischen den beiden Fördervorrichtungen Flockungshilfsmittel zuzuführen.

Der Siebzylinder mit den Förderelementen bildet die eigentliche Trennvorkehrung von geflocktem Schlamm und Flüssigkeit.

Die erfindungsgemäße Vorrichtung erfordert wenig Platz, da eine zusätzliche Pumpe eingespart wird. Auch der Energieaufwand ist kleiner, da ein Pumpvorgang entfällt.

Mit der Vorrichtung ist neben der Eindickung auch eine Entwässerung von Suspensionen möglich. Durch die zwangsfördernde Wirkung der Exzenterschneckenpumpe können bei einem entsprechenden Gegendruck hohe Drücke erzeugt werden.

Ein entsprechender Gegendruck kann beispielsweise erzeugt werden durch Ausgestaltungen der Vorrichtung im Hinblick auf Siebkörperkonstruktion, Abtransport des eingedickten/entwässerten Schlamms, Förderleistung sowie Anordnung oder Ausführung der Förderelemente des Siebzylinders.

Eine Anwendung der Erfindung kann auf das Eindicken bzw. Entwässern von Überschußschlämmen, Schwimmschlämmen, Flotatschlämmen, Primärschlämmen, Faulschlämmen oder anderen Suspensionen erfolgen, allgemein überall dort, wo eine Volumenentlastung erwünscht ist.

Der Antrieb für die gemeinsame Welle ist vorzugsweise auf dem abströmseitigen Ende des Siebzylinders angeordnet. Es ist auch eine Anordnung des Antriebs am gegenüberliegenden Ende möglich.

Damit sich die Trennvorrichtung nicht zusetzt, ist nach einer Ausgestaltung der Erfindung eine Spülvorrichtung vorgesehen, die Spülflüssigkeit ständig oder intermittierend auf die Austrittsseite des Siebzylinders richtet. Es kann eine mindestens eine Spüldüse aufweisende Spülleiste verwendet werden, die parallel zur Wellenachse angeordnet ist. Bei einer anderen Ausführungsform kann ebenfalls eine mindestens eine Düse aufweisende Spülleiste vorgesehen werden, die beweglich angetrieben ist zur ständigen oder intermittierenden Spülung der Siebfläche. Die Bewegung der Spülleiste kann mit der Drehung des Siebzylinders gekoppelt sein, entweder mechanisch, indem eine entsprechende getriebemäßige Untersetzung erfolgt oder auch durch eine elektronische Ansteuerung.

Die Düsen der Spülvorrichtung können Rundstrahl- oder Flachstrahldüsen sein, wie sie an sich bekannt sind.

Bei einer alternativen Lösung der erfindungsgemäßen Aufgabe gemäß Patentanspruch 2 sind ebenfalls Exzenterschneckenpumpe und Siebzylinder von derselben Welle gemeinsam angetrieben. Der Klärschlamm, der dem Flockungsmittel zu gemischt ist, wird über eine geeignete Zuführung dem zugeordneten Ende des Siebzylinders zugeführt, d. h. dem Ende des Siebzylinders, welche der Exzenterschneckenpumpe abgewandt ist. Am stromaufseitigen Ende des Siebzylinders ist ein Filtratablaß, während der Dickschlamm über die Exzenterschneckenpumpe ausgetragen wird.

Es ist nach einer weiteren Ausgestaltung der Erfindung auch denkbar, zusätzlich zu den Förderelementen in dem Siebzylinder die Pumpenwelle, welche sich durch den Siebzylinder hindurch erstreckt, bis zur Exzenterschneckenpumpe ebenfalls mit Förderelementen zu versehen, vorzugsweise mit einer Förderschnecke. Der Gang der Förderschnecke und die Förderelemente des Siebzylinders müssen naturgemäß ineinandergreifen, ohne sich zu berühren oder einen entsprechenden radialen Abstand voneinander haben. Dabei können Schneckengänge, soweit sie in beiden Fällen vorgesehen sind, sich jeweils bis nahe zur Welle bzw. nahe zum Sieb erstrecken.

Eine Exzenterschneckenpumpe ist in der Lage, eine relativ große Förderhöhe bereit zustellen. Umgekehrt besitzt sie nur eine relativ geringe Saughöhe. Es muß vermieden werden, daß der Saugstrom abreißt, da sonst Gefahr besteht, daß die Exzenterschneckenpumpe trocken läuft und dadurch sich selbst zerstört. Bei Anwendungen, in denen eine große Förderhöhe zu überwinden ist, ist daher die zuletzt beschriebene Vorrichtung von Vorteil. Dabei kann es zweckmäßig sein, die Zufuhr des Dünnschlamms über eine geeignete Förderpumpe zu bewerkstelligen. Bei der umgekehrten weiter oben beschriebenen Anordnung kann auf eine gesonderte Förderpumpe vollständig verzichtet werden, wenn eine geringe Saughöhe und eine geringe Förderhöhe vorliegt. Die Vorteile, die in Verbindung mit der ersten beschriebenen Lösung angegeben werden, sind auch bei der zweiten Lösung gleichermaßen vorhanden.

Für den Entwässerungsbetrieb ist ebenfalls die zweite Lösung vorteilhaft, in der die Zufuhr des Dünnschlamms über eine geeignete Förderpumpe erfolgt, vor allem wenn als Dünnschlamm vorkonditionierter oder bereits eingedickter Schlamm verwendet wird.

Die Erfindung wird nachfolgend anhand von in den Zeichnungen dargestellten Ausführungsbeispielen näher erläutert.
- Fig. 1: zeigt im Schnitt schematisch eine Ausführungsform einer Vorrichtung nach der Erfindung.
- Fig. 2: zeigt eine zweite Ausführungsform einer Vorrichtung nach der Erfindung.

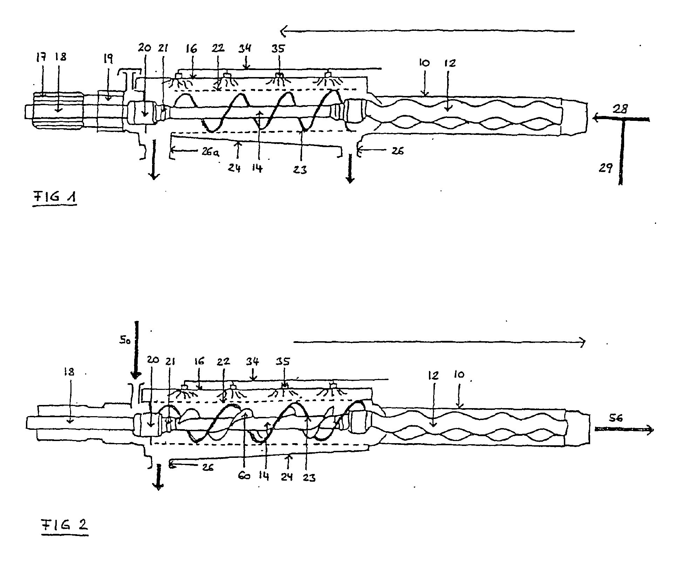

In Fig. 1 ist eine Exzenterschneckenpumpe 10 zu erkennen, die zwei- oder mehrgängig sein kann und an sich bekannt ist. Die Schneckenwelle 12 der Pumpe 10 ist gekoppelt mit einer Welle 14, die in einem Gehäuse 16 angeordnet ist. Welle 14 und Exzenterschneckenpumpe 10 sind von einer gemeinsamen Welle 18 von einem Antriebsmotor 17 angetrieben. In Fig. 1 ist eine Lagervorrichtung 19 für die Welle 18 zu erkennen sowie eine Kupplung 20 mit Gelenk 21, damit die Welle 14 mit der Schneckenwelle "pendeln" kann. Alternativ hierzu kann ebenfalls eine flexible Kuppelstange, beispielsweise ein Flexishaft der Fa. Mono Pumps eingesetzt werden, wodurch das Gelenk entfällt. Der Vorteil beim Einsatz der gelenklosen, flexiblen Kuppelstange liegt darin, daß weniger Bauteile erforderlich sind und daß die Gelenklosigkeit zu einer größeren Baulänge führt, die wiederum eine größere Auslegung der Trenneinheit (Sieblänge) ermöglicht.

Ein Siebzylinder 22 im Gehäuse 16 ist von der Welle 18 angetrieben. An der Innenseite des Siebzylinders 22 ist ein Schneckengang 23 angeordnet, der sich radial bis annähernd zur Welle 14 erstrecken kann. Er kann aus Metall oder Kunststoff geformt sein, und die Steigung der Wendel kann unterschiedlich gewählt werden je nach der Pumpendrehzahl, welche für die Förderzwecke geeignet ist. Auch die Länge des Schneckengangs 23 ist auf diese Parameter einstellbar zu wählen.

Der Boden 24 des Gehäuses 16 hat in Richtung Exzenterschneckenpumpe 10 ein Gefälle und am Ende einen Ablaß 26 für das Filtrat. Am vorderen Ende des Schneckengangs 23 ist ein Ablaß 26a für das konzentrierte Medium (Dickschlamm) vorgesehen.

Der Siebzylinder kann aus einem korrosionsbeständigen Metall oder Kunststoffrnaterial bestehen. Die Öffnungen können von Schlitzen, Spalten oder dergleichen gebildet sein, die in Längs- oder in Querrichtung angeordnet sind. Anstelle eines Metall- oder Kunststoffsiebes kann auch ein Metall- oder Kunststoffgewebe oder dergleichen vorgesehen werden.

Dünnschlamm wird gemäß Pfeil 28 dem Ansaugbereich der Exzenterschneckenpumpe 10 zugeführt. In diesem Bereich kann mit Hilfe einer Zuführ- und Mischvorrichtung Flockungsmittel zugeführt werden, wie durch Pfeil 29 angezeigt. Das Flockungsmittel kann alternativ oder zusätzlich auch in den Verbindungsbereich zwischen dem Gehäuse der Exzenterschneckenpumpe 10 und dem Gehäuse 16 zugeführt werden. In diesem Bereich kann auch ein Flockungshilfsmittel von einer Zuführvomchtung (nicht gezeigt) zugeführt werden.

Der Siebzylinder 22 ist ständig oder von Zeit zu Zeit zu spülen, damit sie sich nicht zusetzt. Bei 34 ist eine stationäre Spülleiste für Spüldüsen 35 gezeigt, um die Siebzylinder 22 zu spülen. Die Spülleiste kann auch quer zur Achse des Siebzylinders oszillierend angetrieben werden Die Lagerung und der Antrieb hiefür sind nicht im einzelnen dargestellt. Auch die Steuervorrichtung für die Bewegung der Spülleisten bzw. der Sprühbetrieb ist hier nicht gezeigt. Sie kann mit der Drehung des Siebzylinders 22 gekoppelt sein oder zeitabhängig arbeiten.

Die bei der Ausführungsform nach Fig. 2 gezeigten Bauteile gleichen weitgehend denen nach Fig. 1, so daß gleiche Teile mit gleichen Bezugszeichen versehen sind. Die Förderrichtung bei der Ausführungsform nach Fig. 2 ist jedoch entgegengesetzt, wie an den langen Pfeilen zu erkennen. Aus einem Mischer (nicht gezeigt) wird entsprechend Pfeil 50 ein Gemisch aus Dünnschlamm und Flockungsmittel zugeführt und in das Gehäuse 16 vor dem Siebzylinder 22 eingetragen. Die Mischung wird mit Hilfe einer Schnecke 60 auf der Welle 14 und dem Schneckengang 23 des Siebzylinders 22 nach rechts transportiert, wobei Filtrat über die Ablaßöffnung 26 abgelassen wird. Das Konzentrat wird von der Exzenterschneckenpumpe 10 gefördert und bei 56 ausgetragen, wobei eine relativ große Höhe überwunden werden kann, beispielsweise zu einem höher gelegenen Stapeltank.

## Patentansprüche

1. Vorrichtung zum Eindicken oder Entwässern von Schlämmen, Sedimenten aus Gewässern oder dergleichen, insbesondere von Überschußschlämmen in Kläranlagen mit folgenden Merkmalen:
- eine zwei- oder mehrgängige Exzenterschneckenpumpe (10) mit einer Pumpenwelle (14) an einem Ende und einem Ansauganschluß für Dünnschlamm (28) am anderen Ende
- eine mit der Antriebswelle (14, 18) gekoppelte Antriebsvorrichtung
- ein zwischen Exzenterschneckenpumpe (10) und Antriebsvorrichtung angeordnetes Fördermittel, das von der Antriebsvorrichtung angetrieben und in einem länglichen Gehäuse (16) angeordnet ist, durch das sich die Pumpenwelle (14) hindurch erstreckt, wobei im Gehäuse (16) eine Trennvorrichtung in Form eines Siebzylinders (22) für die Trennung von Schlamm und Flüssigkeit vorgesehen ist
- ein Filtratablauf (26) auf der stromaufseitigen Seite des Siebzylinders (22) und einem Dickschlammablauf auf der Stromabseite des Siebzylinders (22)
- einer Zuführvorrichtung für Flockungsmittel, die mit dem Ansauganschluß der Exzenterschneckenpumpe (10) und/oder dem Verbindungsbereich zwischen der Exzenterschneckenpumpe (10) und dem Siebzylinder (22) verbunden ist, wobei
- der Siebzylinder (22) um seine Achse drehbar gelagert und von der Antriebsvorrichtung rotierend antreibbar ist und wobei
- der Siebzylinder (22) an der Innenwandung Förderelemente aufweist zur Förderung des Schlamms zum Dickschlammablauf hin.

2. Vorrichtung zum Eindicken oder Entwässern von Schlämmen, Sedimenten aus Gewässern oder dergleichen, insbesondere von Überschußschlämmen in Kläranlagen mit folgenden Merkmalen
- eine zwei- oder mehrgängige Exzenterschneckenpumpe (10) mit einer Pumpenwelle (14) an einem Ende und einem Austritt für Dickschlamm am anderen Ende
- ein der Exzenterschneckenpumpe vorgeordnetes Fördermittel, das von einer Antriebsvorrichtung angetrieben ist und das in einem länglichen Gehäuse (16) angeordnet ist, durch das sich die Pumpenwelle (14) erstreckt
- eine Trennvorrichtung für die Trennung von Schlamm und Flüssigkeit im Gehäuse (16) zwischen Exzenterschneckenpumpe (10) und Antriebsvorrichtung
- ein Filtratablauf auf der stromaufseitigen Seite der Trennvorrichtung und einem Schlammeinlauf am Eingang auf der Pumpenwellenseite der Exzenterschneckenpumpe (10)
- und eine Zuführvorrichtung (50) für ein Gemisch aus Dünnschlamm und Flockungsmittel auf der Stromaufseite des Fördermittels, wobei
- die Trennvorrichtung einen von der Antriebsvorrichtung rotierend antreibbaren Siebzylinder (22) im Gehäuse (16) aufweist, welcher die Pumpenwelle (14) umgibt und wobei
- der Siebzylinder (22) an der Innenwandung Förderelemente (23) aufweist zur Förderung des Schlamms zum Einlauf der Exzenterschneckenpumpe (10).

3. Vorrichtung nach Anspruch 1 oder 2, **dadurch gekennzeichnet, daß** die Fördermittel als Schneckengang oder Segmente eines Schneckengangs ausgebildet sind.

4. Vorrichtung nach Anspruch 3, **dadurch gekennzeichnet, daß** der Schneckengang oder die Segmente sich annähernd bis zur Pumpenwelle (14) erstrecken.

5. Vorrichtung nach einem der Ansprüche 1 bis 4, **dadurch gekennzeichnet, daß** die Pumpenwelle (14) und der Siebzylinder (22) über eine Getriebeanordnung der Antriebsvorrichtung so antreibbar sind, daß der Siebzylinder gegenüber der Pumpenwelle mit unterschiedlicher Drehzahl und/oder Drehrichtung antreibbar ist.

6. Vorrichtung nach einem der Ansprüche 1 bis 5, **dadurch gekennzeichnet, daß** der innerhalb des Siebzylinders (22) befindliche Bereich der Pumpenwelle (14) mit Pumpwellenförderelementen (60) versehen ist, vorzugsweise mit einer Förderschnecke.

7. Vorrichtung nach Anspruch 6, **dadurch gekennzeichnet, daß** die Pumpwellenförderelemente oder der Schneckengang sich radial bis annähernd zum Siebzylinder (22) erstrecken.

8. Vorrichtung nach einem der Ansprüche 1 bis 7, **dadurch gekennzeichnet, daß** der Boden (24) des Gehäuses (16) in Richtung der Exzenterschneckenpumpe (10) bzw. der Antriebsvorrichtung ein Gefälle aufweist, an dessen Ende der Filtratablauf (26) angeordnet ist.

9. Vorrichtung nach einem der Ansprüche 1 oder 3 bis 8, **dadurch gekennzeichnet, daß** die Zuführvorrichtung einen Rotationsflügelmischer aufweist.

10. Vorrichtung nach einem der Ansprüche 1 bis 9, **dadurch gekennzeichnet, daß** dem Siebzylinder (22) eine Spülvorrichtung zugeordnet ist, die Spülflüssigkeit auf die Außenseite des Siebzylinders (22) richtet.

11. Vorrichtung nach Anspruch 10, **dadurch gekennzeichnet, daß** eine mindestens eine Düse (35) aufweisende Spülleiste (34) parallel zur Wellenachse stationär angeordnet ist.

12. Vorrichtung nach Anspruch 10, **dadurch gekennzeichnet, daß** eine mindestens eine Düse aufweisende Spülleiste quer zur Achse der Pumpenwelle gelagert und von einem Spülantrieb angetrieben ist zur ständigen oder intermittierenden Spülung der Siebfläche.

13. Vorrichtung nach Anspruch 12, **dadurch gekennzeichnet, daß** die Bewegung der Spülleiste mit der Drehung des Siebzylinders gekoppelt ist.

14. Vorrichtung nach einem der Ansprüche 11 bis 13, **dadurch gekennzeichnet, daß** eine Steuervorrichtung für die Spülleiste vorgesehen ist, die die Bewegung der Spülleiste und/oder die Abgabe von Spülflüssigkeit steuert, z. B. zeitabhängig.

## Claims

1. A device for thickening or dehydrating sludges, sediments from waters or the like, particularly excess sludges in sewage treatment plants, having the following features:
• a double-start threaded or multiple-start threaded eccentric screw pump (10) having a pump shaft (14) at one end and a section duct connection for thin sludge (28) at the other end,
• a drive mechanism coupled to the driving shaft (14, 18),
• a feeding means arranged between the eccentric screw pump (10) and the drive mechanism which is driven by the drive mechanism and is arranged in an elongate casing (16) which is extended through by the pump shaft (14), with a separating device being provided in the form of a cylindrical-shaped screen (22) in the casing (16) to separate the sludge and liquid,
• a filtrate discharge outlet (26) at the upstream side of the cylindrical-shaped screen (22) and a thickened-sludge discharge outlet at the downstream side of the cylindrical-shaped screen (22),
• a flocculant supply device which is connected to the suction duct connection of the eccentric screw pump (10) and/or the area which connects between the eccentric screw pump (10) and the cylindrical-shaped screen (22), wherein
• the cylindrical-shaped screen (22) is rotatably supported about its axis and is adapted to be rotatingly driven by the drive mechanism, and wherein
• the cylindrical-shaped screen (22) has feeding elements arranged on the inside wall of the screen to deliver the sludge towards the thickened-sludge discharge outlet.

2. The device for thickening or dehydrating sludges, sediments from waters or the like, particularly excess sludges in sewage treatment plants, having the following features:
• a double-start threaded or multiple-start threaded eccentric screw pump (10) having a pump shaft (14) at one end and a thickened-sludge discharge outlet at the other end,
• a feeding means disposed in front of the eccentric screw pump which is driven by the drive mechanism and is arranged in an elongate casing (16) which is extended through by the pump shaft (14),
• a separating device for the separation of the sludge and liquid in the casing (16) between the eccentric screw pump (10) and the drive mechanism,
• a filtrate discharge outlet at the upstream side of the separating device and a sludge charge inlet on the entrance at the pump shaft side of the eccentric screw pump (10),
• and a device for the supply of a mixture of thin sludge and flocculant on the upstream side of the feeding means, wherein
• the separating device has a cylindrical-shaped screen (22) which is adapted to be rotatingly driven by the drive mechanism in the casing (16) and is surrounded by the pump shaft (14), and wherein
• the cylindrical-shaped screen (22) has feeding elements (23) arranged on the inside wall of the screen for feeding the sludge to the charge inlet of the eccentric screw pump (10).

3. The device according to claim 1 or 2, **characterized in that** the feeding means are formed as a screw flight or as segments of a screw flight.

4. The device according to claim 3, **characterized in that** the screw flight or the segments extend approximately up to the pump shaft (14).

5. The device according to any one of claims 1 to 4, **characterized in that** the pump shaft (14) and the cylindrical-shaped screen (22) are adapted to be driven via a gearing assembly of the drive mechanism in such a way that the cylindrical-shaped screen (22) is adapted to be driven at a different number of revolutions and/or in a different sense of rotation with respect to the pump shaft.

6. The device according to any one of claims 1 to 5, **characterized in that** the region of the pump shaft (14) that is located within the cylindrical-shaped screen (22) is provided with feeding elements (60), preferably a feed screw.

7. The device according to claim 6, **characterized in that** the feeding elements or the screw flight extend radially approximately up to the cylindrical-shaped screen (22).

8. The device according to any one of claims 1 to 7, **characterized in that** the bottom (24) of the casing (16), towards the eccentric screw pump (10) or the drive mechanism, has a gradient at the end of which the filtrate discharge outlet (26) is arranged.

9. The device according to any one of claims 1 or 3 to 8, **characterized in that** the supplying device has a rotary-vane mixer.

10. The device according to any one of claims 1 to 9, **characterized in that** the cylindrical-shaped screen (22) has associated therewith a scouring device which directs scouring liquid to the outer surface of the cylindrical-shaped screen (22).

11. The device according to claim 10, **characterized in that** a scouring strip (34) having at least one scour nozzle (35) is stationarily arranged in parallel with the shaft axis.

12. The device according to claim 10, **characterized in that** a scouring strip having at least one nozzle is supported crosswise with the axis of the pump shaft and is driven by a scouring drive to scour the screen surface continuously or intermittently.

13. The device according to claim 12, **characterized in that** the movement of the scouring strip is coupled to the rotation of the cylindrical-shaped screens.

14. The device according to any one of claims 11 to 13, **characterized in that** a control device is provided for the scouring strip that controls the movement of the scouring strip and/or the discharge of scouring liquid, e.g. in a time-dependent manner.

## Revendications

1. Dispositif d'épaissement ou de deshydratation de boues, de sédiments constitués d'eaux ou équivalent, notamment d'excès de boues de stations d'épuration des eaux usées, avec les caractéristiques suivantes:
• une pompe à vis excentrique (10) à deux ou plus filets avec un arbre de pompe (14) dans une extrémité, et une connexion d'aspiration pour boue de faible épaisseur (28) dans l'autre extrémité,
• un mécanisme moteur couplé à l'arbre moteur (14, 18),
• un moyen de transport disposé entre la pompe à vis excentrique (10) et le mécanisme moteur, qui est entraîné par le mécanisme moteur et disposé dans un boîtier longitudinal (16) à travers duquel s'étend l'arbre de pompe (14), dans le boîtier (16) étant pourvu un mécanisme de séparation en forme d'un cylindre perforé (22) pour la séparation de boue et de liquide,
• un orifice de sortie pour le filtrat (26) dans le côté amont du cylindre perforé (22) et un orifice de sortie pour la boue de grande épaisseur dans le côté aval du cylindre perforé (22),
• un mécanisme d'alimentation pour agent floculant, qui est relié avec la connexion d'aspiration de la pompe à vis excentrique (10) et/ou la région de connexion entre la pompe à vis excentrique (10) et le cylindre perforé (22), dans lequel
• le cylindre perforé (22) est monté de façon tournante autour de son axe et entraînable en rotation par le mécanisme moteur, et dans lequel
• le cylindre perforé (22) présente des éléments de transport dans sa paroi intérieure pour la transportation de la boue vers l'orifice de sortie pour la boue de grande épaisseur.

2. Dispositif d'épaissement ou de deshydratation de boues, de sédiments constitués d'eaux ou équivalent, notamment d'excès de boues de stations d'épuration des eaux usées, avec les caractéristiques suivantes:
• une pompe à vis excentrique (10) à deux ou plus filets avec un arbre de pompe (14) dans une extrémité, et un orifice de sortie pour boue de grande épaisseur dans l'autre extrémité,
• un moyen de transport disposé avant la pompe à vis excentrique et qui est entraîné par un mécanisme moteur et disposé dans un boîtier longitudinal (16) à travers duquel s'étend l'arbre de pompe (14),
• un mécanisme de séparation pour la séparation de boue et de liquide dans le boîtier (16) entre la pompe à vis excentrique (10) et le mécanisme moteur,
• un orifice de sortie pour le filtrat dans le côté amont du mécanisme de séparation et un orifice d'introduction pour boue dans l'entrée sur le coté d'arbre de pompe de la pompe à vis excentrique (10),
• et un mécanisme d'alimentation (50) pour un mélange de boue de faible épaisseur et d'agent floculant dans le côté amont du moyen de transport, dans lequel
• le mécanisme de séparation présente dans le boîtier (16) un cylindre perforé (22), entraînable en rotation par le mécanisme moteur et entourant l'arbre de pompe (14), et dans lequel
• le cylindre perforé (22) présente des éléments de transport (23) dans sa paroi intérieure pour la transportation de la boue vers l'orifice d'introduction de la pompe à vis excentrique (10).

3. Dispositif selon la revendication 1 ou 2, **caractérisé en ce que** les moyens de transport sont réalisés comme spire de vis ou segments d'une spire de vis.

4. Dispositif selon la revendication 3, **caractérisé en ce que** la spire de vis ou les segments s'étendent à peu près jusqu'à l'arbre de pompe (14).

5. Dispositif selon l'une quelconque des revendications 1 à 4, **caractérisé en ce que** l'arbre de pompe (14) et le cylindre perforé (22) sont entraînables par un train d'engrenages du mécanisme moteur, de sorte que le cylindre perforé peut être entraîné par rapport à l'arbre de pompe avec des vitesses de rotation et/ou directions de rotation différentes.

6. Dispositif selon l'une quelconque des revendications 1 à 5, **caractérisé en ce que** la région de l'arbre de pompe (14) se trouvant dans l'intérieur du cylindre perforé (22) est pourvue d'éléments de transport d'arbre de pompe (60), de préférence d'une hélice transporteuse.

7. Dispositif selon la revendication 6, **caractérisé en ce que** les éléments de transport d'arbre de pompe ou la hélice transporteuse s'étendent radialement à peu près jusqu'au cylindre perforé (22).

8. Dispositif selon l'une quelconque des revendications 1 à 7, **caractérisé en ce que** le fond (24) du boîtier (16) a une pente dans la direction de la pompe à vis excentrique (10) ou respectivement du mécanisme moteur, dans la fin de laquelle l'orifice de sortie pour le filtrat (26) est disposé.

9. Dispositif selon l'une quelconque des revendications 1 ou 3 à 8, **caractérisé en ce que** le mécanisme d'alimentation présente un mélangeur à ailes de rotation.

10. Dispositif selon l'une quelconque des revendications 1 à 9, **caractérisé en ce que** un dispositif de rinçage est associé au cylindre perforé (22), qui dirige du liquide de rinçage vers le côté extérieur du cylindre perforé (22).

11. Dispositif selon la revendication 10, **caractérisé en ce que** un bras de rinçage (34) ayant au moins une tuyère (35) est disposé de façon stationnaire en parallèle à l'axe d'arbre.

12. Dispositif selon la revendication 10, **caractérisé en ce que** un bras de rinçage ayant au moins une tuyère est monté en travers de l'axe d'arbre et entraîné par un entraînement de rinçage, pour rinçage permanent ou intermittent de l'aire perforée.

13. Dispositif selon la revendication 12, **caractérisé en ce que** le mouvement du bras de rinçage est couplé à la rotation du cylindre perforé.

14. Dispositif selon l'une quelconque des revendications 11 à 13, **caractérisé en ce que** un dispositif de commande est pourvu pour le bras de rinçage, qui commande le mouvement du bras de rinçage et/ ou la jetée de liquide de rinçage, par exemple en fonction du temps.
